# EUROPEAN PATENT SPECIFICATION

(11) **EP 2 158 169 B1**
(45) Date of publication and mention of the grant of the patent: **05.10.2016**
(21) Application number: 07852849.4
(22) Date of filing: 19.10.2007
(51) Int. Cl.: C03B 37/012, C03B 37/027

(54) **METHOD FOR CONTINUOUS OR BATCH OPTICAL FIBER PREFORM AND OPTICAL FIBER PRODUCTION**
VERFAHREN ZUR KONTINUIERLICHEN ODER DISKONTINUIERLICHEN HERSTELLUNG VON LICHTLEITFASERVORFORMEN UND LICHTLEITFASERN
PROCÉDÉ POUR LA PRODUCTION CONTINUE OU DISCONTINUE DE PRÉFORMES DE FIBRES OPTIQUES ET DE FIBRES OPTIQUES

(30) Priority: 29.01.2007 US 699162
(43) Date of publication of application: 03.03.2010
(73) Proprietor: Brown,, David, P., FI-00320 Helsinki (FI); Kauppinen, Esko, I., 00730 Helsinki (FI)
(72) Inventor: Brown,, David, P., FI-00320 Helsinki (FI); Kauppinen, Esko, I., 00730 Helsinki (FI)
(74) Representative: Papula Oy
(86) International application number: PCT/US2007/022293
(87) International publication number: WO 2008/094228

(56) References cited:
- EP-A1- 0 463 783
- EP-A1- 0 978 486
- WO-A1-00/07950
- GB-A- 2 015 991
- GB-A- 2 067 181
- JP-A- 2003 020 243
- US-A- 4 642 129
- US-A1- 2003 232 200
- US-A1- 2006 141 142
- US-B1- 6 723 435
- US-B1- 6 723 435

## Description

### BACKGROUND OF THE INVENTION

### Field of the Invention

The present invention relates to a method for fiber and/or preform production and in particular optical fiber and/or optical fiber preform production in which an fiber substrate and a multilayered preform can be continuously produced. The layered preform is constructed from multicomponent particles deposited from one or more aerosol streams wherein the individual particles have the ratio of components as desired in the preform layer. Preferably, the components of the aerosol particles have a sub-particle structure in which the sub-particle structure dimensions are smaller than the particle diameter and more preferably smaller than the wavelength of light and more preferably on molecular dimensions. Preferably, the particles are deposited on the preform substrate via one or more deposition units. Multiple deposition units can be operated simultaneously and/or in series. As the preform is synthesized, it can be simultaneously fed into a drawing furnace for continuous production of fiber. The method can also be used for batch production of preforms and fibers. The method can also be applied to the production of, for instance, colored or smoked glass products.

### Description of related Art

Optical fibers (optical wave guides) are used extensively for high speed and high volume data transmission. Improved purity and control of optical fiber has allowed ever increasing data transmission and decreasing transmission losses. Methods for production typically rely on batch production of an optical fiber preform via internal or external chemical vapor deposition (CVD) (sometimes called modified chemical vapor deposition or MCVD) as has been described in, for instance, US 3,711,262, US 3,737,292, US 3,823,995, US 3,933,454, US 4,217,027 and US 4,341,541 and JP 04021536. In these techniques, one or more gas phase precursors, such as SiCl₄, BCl₃, GeCl₄ and/or POCl₃, are thermally decomposed so as to nucleate particles (soot) either inside or outside a preform which are then deposited on the preform surface and heated to remove interparticle voids and to sinter the deposition layer. The layered preform is then drawn into a fiber having approximately the same radial distribution of compounds as the preform.

Document US4642129 describes a means of producing an optical fiber preform by the use of premade glass particles which are aerosolized for deposition on a substrate. Document US6723435 describes a method and apparatus for producing and an optical fiber preform wherein submicron particles produced by homogeneous nucleation from a precursor gas are deposited on a substrate. Document GB2067181 describes a method and apparatus for producing and optical fiber preform wherein a liquid solution of preform precursors is depositing on a rapidly rotating substrate to evenly distribute the liquid before drying on the substrate. Document JP2003020243 describes a method and apparatus for for producing and an optical fiber preform in which a liquid dispersion containing premade silica powders is deposited on a rotating substrate and then drying the dispersion when on the substrate.

Numerous variations of the basic method have been proposed to increase purity and enhance deposition efficiency (e.g. US 4,331,462, WO 98/25861, US 2005/0019504) or to modify the preform structure or composition (e.g. US 3,884,550, US 2001/0031120 A1, US 6,776,991 B1, US 2005/0252258, US 2005/0180709, US 5,246,475), however, the batch nature and the use of thermal decomposition of gas precursors to form a deposition soot has been largely maintained. GB 2015991, WO 99/03781, WO 00/07950, EP 0 463783A1 and EP 0978486A1 describe variations in which one or more liquid precursors are first vaporized (sometimes in the presents of additional reagents as in US 3,883,336 and WO 00/20346) and then nucleated to form soot particles for deposition.

Such methods are able produce high quality single or multimode optical fiber in which the refractive index can be varied across the fiber radius, however, the cable length is limited by the discontinuous nature of the production process and deposition rates are low. In addition to the inherent variability of batch process and the ever present "end" effects requiring the drawn fiber from either end of the preform to be discarded, sections of cable must be joined to achieve sufficient lengths for many applications. This leads to complex couplings (e.g. US 4,997,797) and associated losses and disruptions in light transfer. Methods have been reported which claim to be continuous but which, in reality rely on a finite length filament or substrate (e.g. US 5,114,738). Moreover, the methods described produce a coating composed of nucleated particles having a wide distribution of size and morphology which can further reduce transmission efficiency. This is attributable to the means of producing deposition particles, namely gas-to-particle nucleation, in which the different compounds needed to build the deposition layer are largely present in different aerosol particles. Consequently, a method which can overcome the inherent limitations of the batch production methods, improve the efficiency of use of synthesis materials and increase the homogeneity of the constituent compounds in the deposit layers of the preform and fiber so as to improve optical transmission efficiency would be beneficial to industry and commerce.

### 2. BRIEF SUMMARY OF THE INVENTION

The present invention relates to a method for the production of preforms and fiber and in particular optical fiber and optical fiber preforms in continuous or batch reactors. This method comprises the steps of:
a) Inserting a preform substrate into a preform reactor;
b) Introducing one or more carrier gases and one or more deposition particles or deposition particle precursor particles into the preform reactor wherein the particles and/or particle precursors contain a matrix material and one or more doping agents; wherein one or more compounds or compound precursors are dispersed in a solvent or solution, atomizing the solution or solutions to produce deposition particles of a given property or deposition particle precursor particles;
c) Applying a force to the deposition particles essentially in the direction of the preform substrate to enhance the deposition particles in a deposition enhancer; and
d) Depositing all or part of the deposition particles on the substrate to form a deposition particle layer.

This invention allows high deposition efficiencies of matrix material and dopants, high uniformity of dopants in the preform and can be easily integrated into existing preform and fiber drawing facilities. Various forces can be used according to the invention to enhance deposition including thermophoretic, inertial, electrophoretic, photophoretic, acoustic and/or gravitational. Deposition particles preferably have an aerodynamic diameter between 0.01 micrometers and 1000 micrometers and more preferably between 0.1 micrometers and 100 micrometers and most preferably between 1 micrometers and 10 micrometers. Deposition particles have a sub-particle structure in which the sub-particle structure dimensions are smaller than the particle diameter and when the final product is optical fiber, more preferably smaller than the wavelength of the light to be transmitted though the optical fiber and more preferably on the molecular scale. Energy can be applied to the deposition particles or precursor particles and/or particle precursor gases by any means known in the art including laser, electrical, resistive, conductive, radiative (in the entire range of the electromagnetic spectrum) and/or acoustic or vibrational heating, combustion or chemical reaction, and/or nuclear reaction. The invention additionally allows multiple fibers to be synthesized in parallel for direct fabrication of fiber cable. The substrate can be in the form of a rod, tube or, essentially, any other shape. The substrate can be later incorporated into the fiber if it is made from a suitable material, or removed before drawing the fiber and so act as a template or mandrel. Moreover, the invention, though here described in detail for the production of optical fiber preforms and optical fiber preforms, can also be applied to for instance, the production of colored or smoked decorative glasses, oscillators, amplifiers and lasers. In addition, the layered preforms can be processed with other means known in the art besides drawing, such as molding or extruding.

### 3. BRIEF DESCRIPTION OF THE SEVERAL VIEWS OF THE DRAWINGS

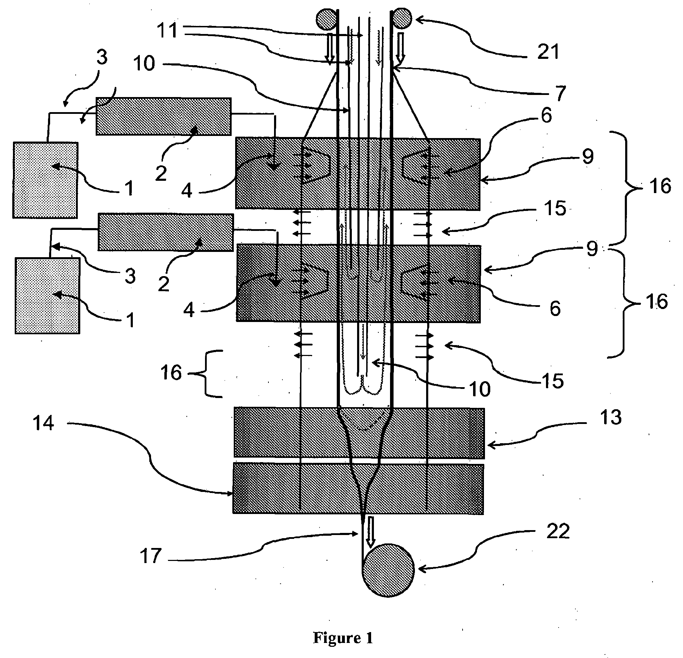

**Figure 1** shows a diagram of the preferred embodiment of the method for continuous optical fiber production in which the particle conditioner and deposition enhancer are separated in space and in series and in which there are multiple deposition units with cooling probes positioned in series and continuously operated and in which deposition enhancement is achieved by both inertia and thermophoresis and in which the sintering and drawing furnaces are incorporated in series downstream of the deposition units.

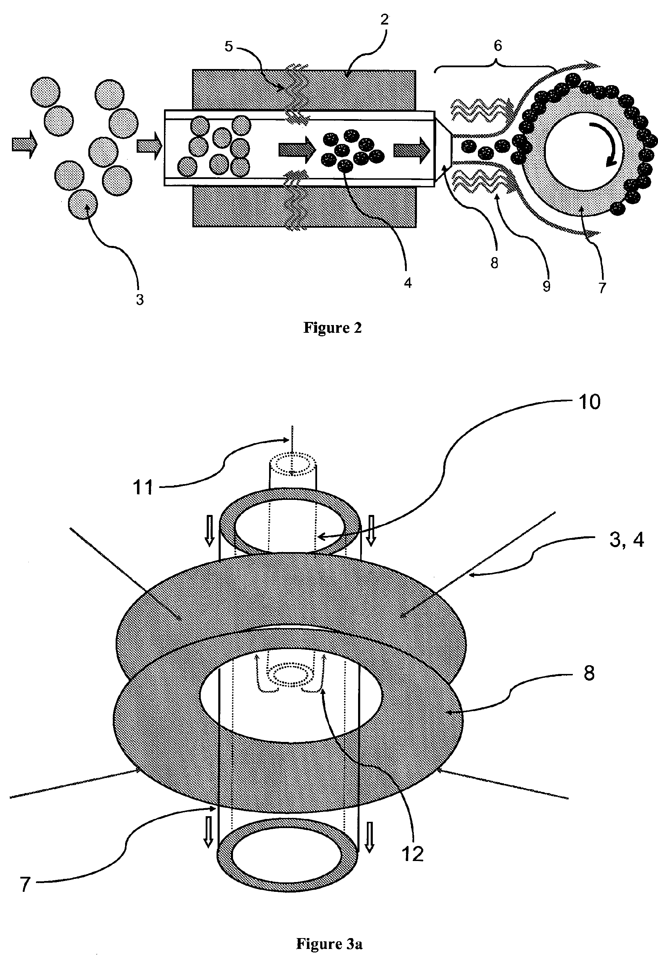

**Figure 2** shows a diagram of a close-up of a deposition particle conditioner and deposition enhancement device of the preferred embodiment of the method for continuous or batch optical fiber production in which the particle conditioner and deposition enhancer are separated in space and in series and in which deposition enhancement is achieved by both inertia and thermophoresis.

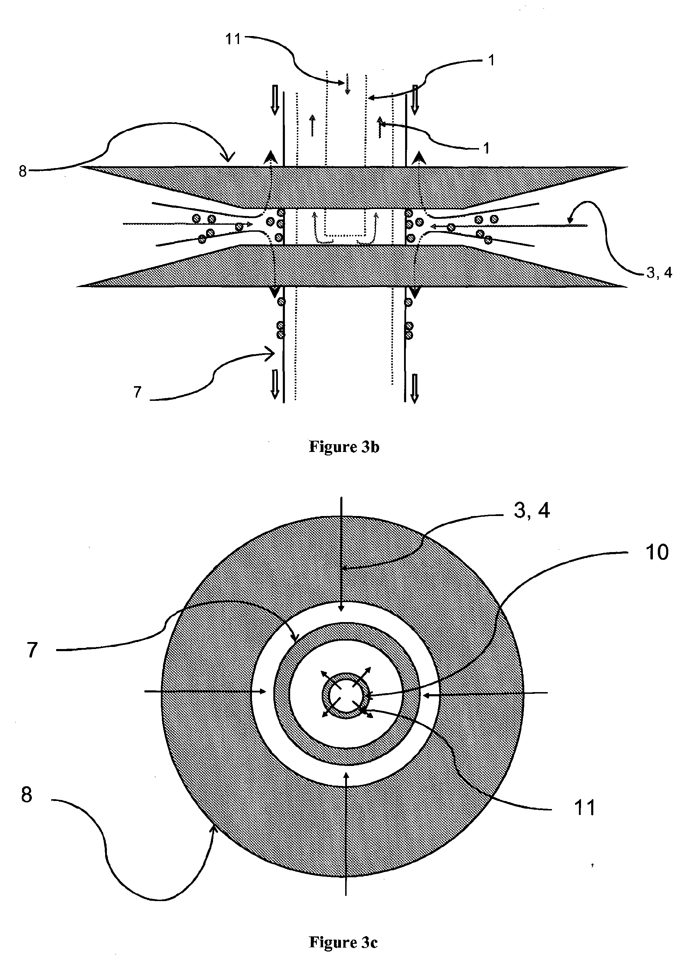

**Figure 3** shows isometric (a), side (b) and top (c) views of a preferred embodiment of the invention for continuous or batch optical fiber production wherein the deposition enhancer is a heated toroidal shaped nozzle and where deposition enhancement is achieved by both inertia and thermophoresis.

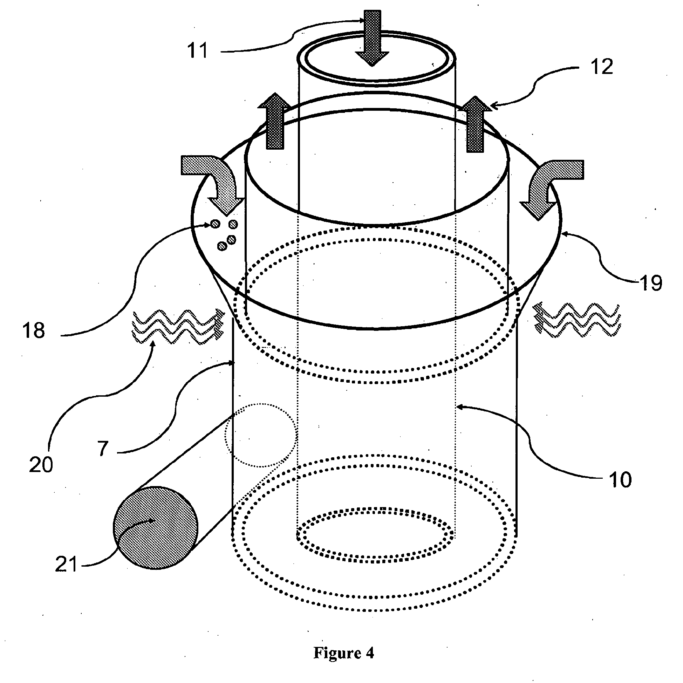

**Figure 4** shows a preferred embodiment of the invention for continuous optical fiber production wherein the optical fiber preform substrate is continuously formed from substrate precursor melts, powders or pellets and wherein a cooling probe for thermophoretic deposition enhancement is inserted through the center of a substrate mold into the optical fiber preform substrate.

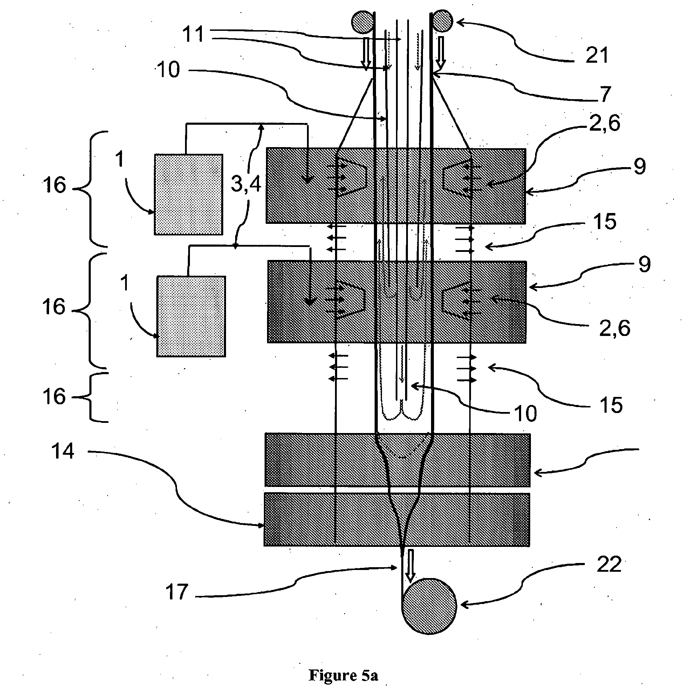

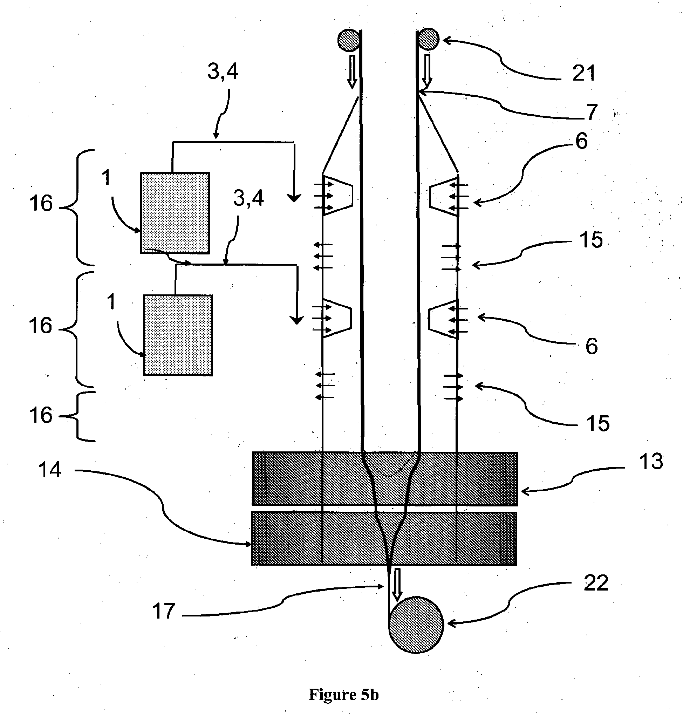

**Figure 5** shows a diagram of a preferred embodiment of the method for continuous optical fiber production in which a), the particle conditioner and deposition enhancer are combined in space and in which there are multiple deposition units and cooling probes positioned in series and continuously operated and in which deposition enhancement is achieved by both inertia and thermophoresis and in which the sintering and drawing furnaces are in series are incorporated in series downstream of the deposition units and b), the deposition particles are directly introduced into the deposition enhancer and in which there are multiple deposition units positioned in series and continuously operated and in which deposition enhancement is achieved only by inertia and in which the sintering and drawing furnaces are in series are incorporated in series downstream of the deposition units.

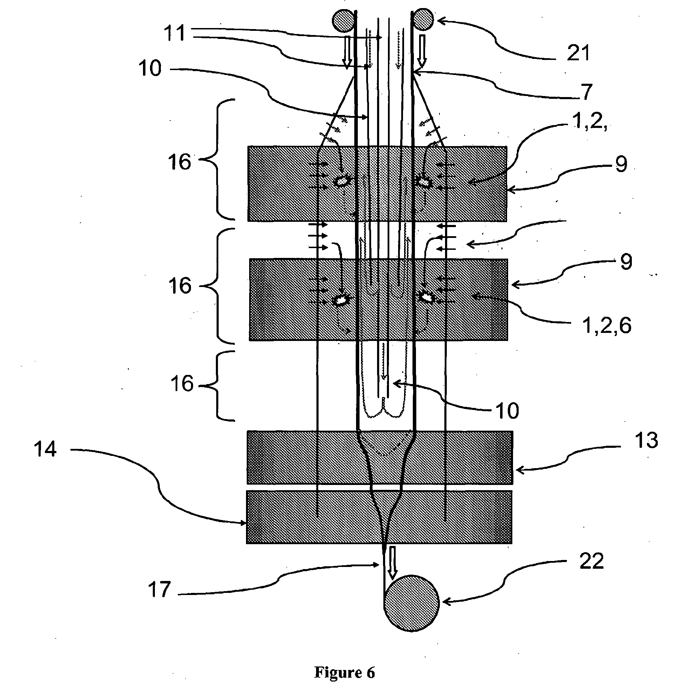

**Figure 6** shows a diagram of the preferred embodiment of the method for continuous optical fiber production in which precursor particle formation, precursor particle conditioning, deposition particle formation and deposition are combined in space and in which there are multiple deposition units and cooling probes and in which deposition enhancement is achieved by both inertia and thermophoresis and in which the sintering and drawing furnaces are incorporated in series downstream of the deposition units.

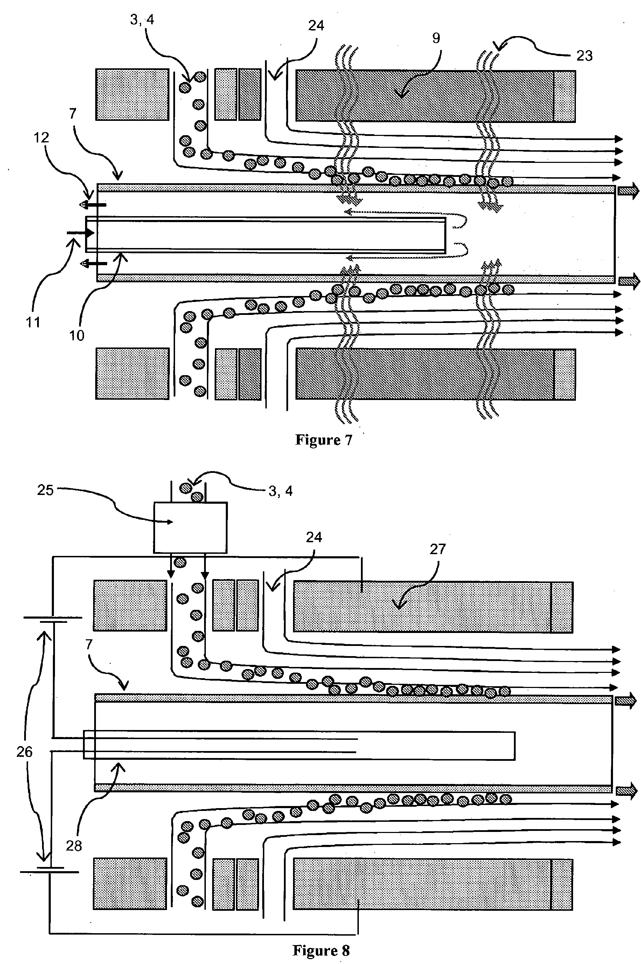

**Figure 7** shows a diagram of a close-up of a deposition enhancer of a preferred embodiment of the invention for continuous or batch optical fiber production in which deposition enhancement is achieved by thermophoresis alone and wherein sheath gas is used to further control deposition.
**Figure 8** shows a diagram of a close-up of a deposition enhancer of a preferred embodiment of the invention for continuous or batch optical fiber cable production in which deposition enhancement is achieved by electrophoresis alone and wherein sheath gas us used to further control deposition.

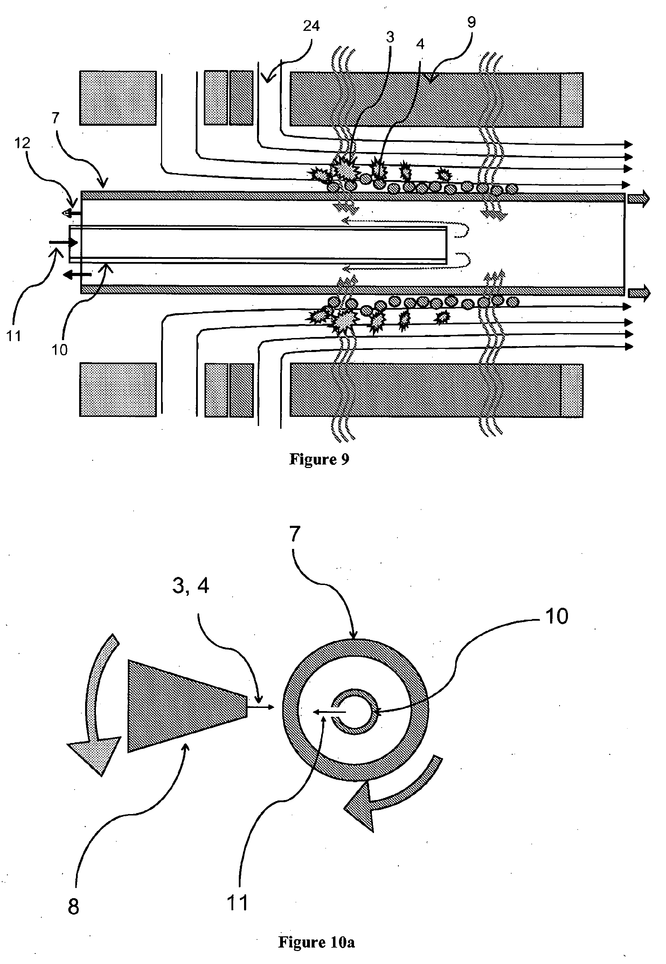

**Figure 9** shows a diagram of a close-up of a deposition enhancer of a preferred embodiment of the invention for continuous or batch optical fiber production in which deposition enhancement is achieved by thermophoresis alone and wherein sheath gas used to further control deposition and wherein deposition particle precursor particles and/or deposition particles are formed *in situ* in the deposition enhancer.

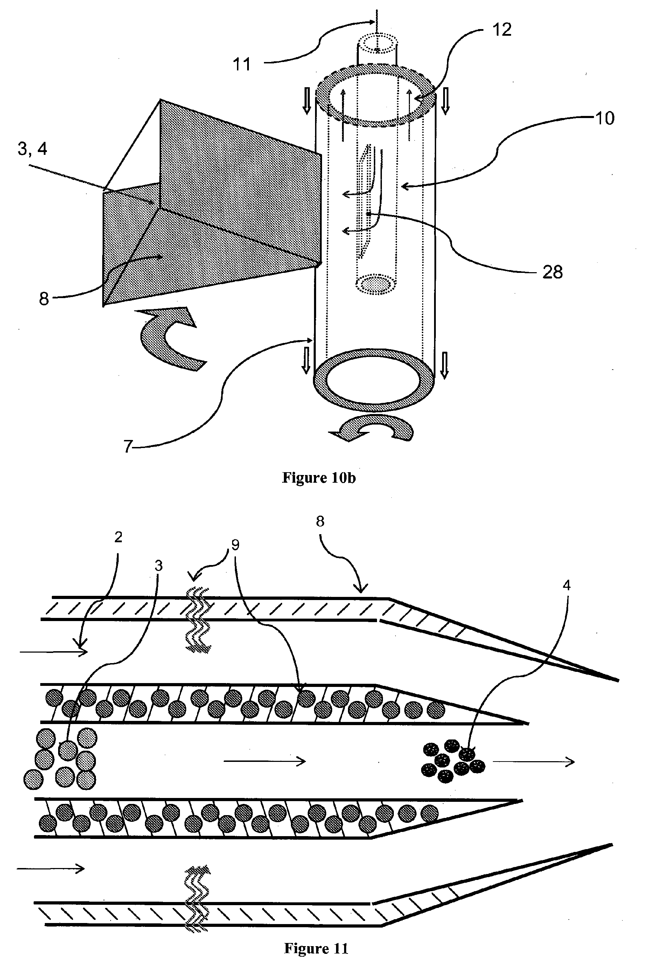

**Figure 10** shows axial and isometric views of a deposition enhancer of a preferred embodiment of the invention for continuous or batch optical fiber production in which deposition enhancement is achieved by inertia and thermophoresis and wherein the deposition nozzle and the cooling probe and the optical fiber preform substrate are rotated with respect to each other about a common axis of rotation so as to achieve essentially uniform particle deposition on the optical fiber preform substrate.
**Figure 11** shows a side view of a deposition enhancing nozzle combined with a deposition aerosol particle conditioner of a preferred embodiment of the invention for continuous or batch optical fiber production in which a nozzle sheath gas flow is introduced so as to further reduce loses and/or enhance deposition efficiency.

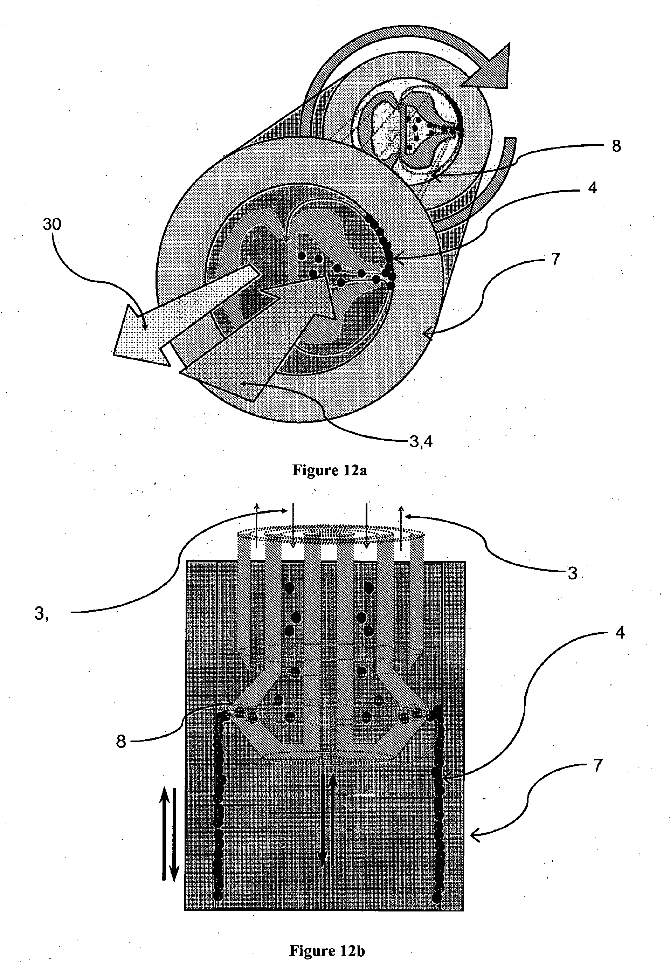

**Figure 12** shows deposition enhancers suitable for internal deposition of deposition particles in which a) the deposition nozzle is oriented along the axis of the optical fiber preform substrate tube and has an exit essentially rectangular in shape b) the deposition nozzle is essentially toroidal in shape and is oriented perpendicular to the axis of the optical fiber preform substrate.

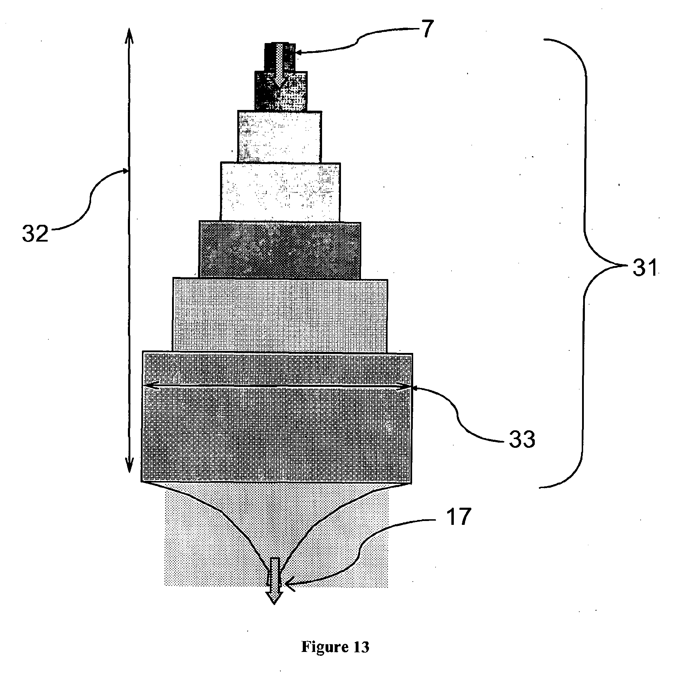

**Figure 13** shows a schematic diagram of an optical fiber preform cone produced according to the embodiment depicted in Figures 1, 5 and 6.

### 4. DETAILED DESCRIPTION OF THE INVENTION

Figure 1 shows a schematic diagram of a preferred embodiment of the invention in which a optical fiber preform substrate rod or tube is fed into an optical fiber preform reactor and subsequently coated with deposition particles, thus creating a layered preform structure having an index of refraction that can vary with radial distance from the center of the optical fiber. The preform substrate can later be further sintered and drawn, along with the coating material or removed before drawing and so act as a mandrel. In the preferred operation of this embodiment, deposition particle precursor particles are formed as an aerosol of liquid droplets by an aerosol generator (1) and carrier gas in which the aerosol particles contain an essentially optically transparent matrix material and a dopant or additive that changes a property of the material. In the preferred embodiment, the matrix material is silica, however other suitable materials are possible according to the invention. In the preferred embodiment, the aerosol generator is an ultrasonic nebulizer, though other means of generating an aerosol from a feed stock which are known in the art may be employed. These include, but are not limited to, spray nozzles, air assisted nebulizers, spinning disks, pressurized liquid atomizers, electro sprays or vibrating orifices. In the preferred embodiment of the invention, the property to by changed or varied in the deposition particles is the index of refraction, however, other properties are possible according to the invention, for instance, the color, transparency and or conductivity. In the preferred embodiment, the deposition particle precursor particles consists of one or more solvents or excipients, together with one or more essentially optically transparent matrix materials or essentially optically transparent matrix material precursors and dopants and/or dopant precursors in ratios as desired in the optical fiber. Dopants include, but are not limited to the elements, B, Er, Yb, P, Nb, Tm, Ge and/or Al. Dopants can be introduced in various forms, however it is preferable that they be introduced in a liquid form either directly or as a component in a liquid or solid chemical precursor. It is preferable that dopants or their chemical precursor be introduced in a solution or mixture together with the matrix material, either in solution with the matrix material or with a matrix material precursor. Other compositions of deposition particle precursor particles are possible according to the invention so long as the particles do not fully vaporize before depositing on the preform substrate. The mixture of carrier gas and deposition particle precursor particles (the precursor particle aerosol) can then sent to an aerosol particle conditioner (2) wherein the time, temperature, pressure and/or species concentration history of the aerosol is controlled so as to form an aerosol of deposition particles having a sub-particle structure in which the sub-particle structure dimensions are smaller than the deposition particle diameter and more preferably smaller than the wavelength of the light to be transmitted though the optical fiber. Preferably this structure is on the nanometer scale and more preferably it is on the molecular scale. Alternatively, the deposition particle precursor particle aerosol can be transported directly to the deposition enhancer and not be conditioned separately as described later. In this case, the particle conditioner and deposition enhancer are combined. The deposition particle sub-particle structure may be crystalline, amorphous or liquid or a combination thereof, though amorphous is preferred. For maximum particle deposition efficiency, the deposition particles have an aerodynamic diameter preferably between 0.01 micrometers and 1000 micrometers and more preferably between 0.1 micrometers and 100 micrometers and most preferably between 1 micrometer and 10 micrometers. The preferred embodiment is shown in more detail in Figure 2 where the deposition particle precursor particles (3) are transformed into deposition particles (4) under the application of energy (5) in an aerosol particle conditioner (2). In the preferred embodiment, the aerosol particle conditioner is a heated furnace, though other energy sources and configurations are possible according to the invention. Examples of alternative energy sources include, but are not limited to, electromagnetic, resistive, conductive, radiative, nuclear or chemical heating.

The deposition particle aerosol is then introduced into the deposition enhancer (6) which deposits deposition particles on the optical fiber preform substrate (7). In the preferred embodiment, the deposition enhancer applies inertial and/or thermophoretic forces to cause enhanced particle deposition. Other forces including, but not limited to acoustic, photophoretic and/or electrophoretic can be used, some of which are described in more detail in alternate embodiments. In the preferred embodiment, the deposition enhancer consists of a toroidal shaped nozzle (8), a heat source (9) and a cooling probe (10) inserted inside the optical fiber preform substrate (7) tube as is depicted in Figure 3. Other components of the deposition enhancer are possible according to the invention using, for instance, acoustic and/or electrical methods. In the preferred embodiment, the nozzle serves to accelerate the aerosol particles toward the optical fiber preform substrate with sufficient velocity to provide an inertial force acting essentially perpendicular to the substrate surface. In the preferred embodiment, the heat source (9), alone or in combination with the cooling provided by the cooling probe, in which a cooling fluid (11) at a lower temperature than the surface of the optical fiber preform substrate is introduced, provides a secondary deposition enhancement mechanism due to thermophoresis across the developed temperature gradient in the vicinity of the optical fiber substrate surface. The thermophoretic deposition enhancer can also act as a deposition particle conditioner and thus the heat source for the thermophoretic deposition enhancer can also be the particle conditioning energy source. In the preferred embodiment of the invention, the cooling flow is exhausted in the direction opposite to its introduction (12) due to the eventual collapsing of the inside of the optical fiber preform, either in an optional sintering furnace (13) or drawing furnace (14) downstream in the synthesis process. Other means of directing the cooling flow are possible according to the invention. To better control the flow of deposition particles in the deposition enhancer, all or part of the deposition aerosol flow carrier gas and any remaining deposition particles not deposited on the optical fiber preform substrate are preferably evacuated via one or more evacuation ports (15).

The combination of aerosol generator, optional deposition particle conditioner, deposition enhancer and optional evacuation port comprise a deposition unit (16). In the preferred embodiment operating for continuous production of optical fiber (17), individual deposition units are preferably situated in series and operated simultaneously as depicted in Figure 1. Each deposition unit can thus have a separately controlled aerosol generator, deposition particle conditioner, deposition enhancer and/or evacuation port as needed to continuously produce layers of varying optical properties on the optical fiber preform substrate as desired. Thus each deposition unit supplies deposition particles of a different property and thus allows the properties of the preform to vary layer by layer.

For batch production of optical fiber, the optical fiber preform substrate can be produced beforehand as is known in the art. However, according to the invention, it is preferable to produce the optical fiber preform substrate continuously as part of the process as depicted in Figure 4. In the preferred embodiment, optical fiber preform substrate precursor material in the form of melts, beads or powders (18) is continuously fed into a mold or extruder (19) wherein sufficient energy (20) is supplied to transform the optical fiber preform substrate precursor material into a glassy, molten or liquid state in the mold or extruder resulting in a fiber optic substrate of desired diameter and thickness. For continuous optical fiber production, the velocity of the fiber optic substrate is preferably controlled by the rate of introduction of precursor melts, beads or powders and by a substrate feeding mechanism (21), however, any means of controlling the precursor feed rate and substrate feeding mechanism as are known in the art are possible according to the invention. When thermophoretic deposition enhancement due to a cooling flow is used, the cooling probe preferably is inserted through the center of the mold or extruder and the forming optical fiber preform substrate and along the bore of the fiber optic substrate. Additionally, other elements for deposition enhancement can be inserted through the center of the mold or extruder such as electrodes for electrostatic deposition enhancement as will be described in Figure 8. In batch production, the composition of the composition of deposition particles is changed over time to achieve a gradient in preform properties as desired. At the end of the process, the optical fiber is drawn and further clad as is known in the art and can be laid directly or collected on a spool (22) as is known in the art.

Figures 5 and 6 show schematic diagrams of alternate preferred embodiments of the invention in which the deposition particle precursor particle aerosol is fed directly into a deposition enhancer (6) and where the deposition enhancer also serves as a deposition particle conditioner (2). Figure 5a and 5b show embodiments wherein the deposition particle precursor particles are introduced from an aerosol generator (1). In Figure 5a, the particles are preconditioned in an aerosol particle conditioner (2) before depositing. In Figure 5b, the particles are delivered directly to the deposition enhancer (6). Figure 6 shows an embodiment where the deposition particle precursor particle-aerosol is formed by nucleation from a gas which, when directed to the deposition enhancer (6), chemically reacts or decomposes to form deposition particles or deposition particle precursor particles which are then conditioned *in situ.*

Turning now to more details of deposition enhancers according to the invention, Figure 7 shows details of the embodiments of Figure 1 and Figure 5 wherein the deposition enhancer uses only thermophoresis with thermal energy (23) supplied by a furnace (9) and cooling provided by a cooling probe (10) and wherein sheath gas (24) is used to protect the furnace wall from deposition of otherwise uncollected deposition particles and wherein a continuous optical fiber preform substrate (7) tube transverses the reactor so as to create an essentially uniform deposit of deposition particle material on the optical fiber preform substrate surface and where the speed of the traversing optical fiber preform substrate, the heat supplied by the energy source and the flow rate and composition of the deposition particle aerosol or deposition particle precursor particle aerosol are used to control the deposition rate and the thickness of deposition layer. Alternately, if the optical fiber preform substrate is not continuously traversed, the embodiment can be used for batch production.

Figure 8 shows a close-up of an alternate embodiment of the a deposition enhancer which can be used separately or integrated into other embodiments of the invention wherein the deposition particle aerosol or deposition particle precursor particle aerosol is fed into a charging apparatus (25) such that the deposition particles or deposition particle precursor particles are made to carry a net charge and wherein a voltage source (26) is used to supply a electrical potential between an anode or cathode (27) at the reactor wall and a corresponding central cathode or anode (28) inside the optical fiber preform substrate so as to propel the deposition particles or deposition particle precursor particles onto the optical fiber preform substrate surface and wherein the continuous optical fiber preform substrate (7) transverses the reactor so as to create an essentially uniform deposit of deposition particle material on the optical fiber preform substrate surface and where the speed of the traversing optical fiber preform substrate, the charge on the particles, the applied voltage and the flow rate and composition of the deposition particle or precursor particle are used to control the deposition rate and the thickness of deposition layer. Alternately, if the optical fiber preform substrate is not continuously traversed, the embodiment can be used for batch production.

Figure 9 shows a close-up of an alternate embodiment of a deposition enhancer which can be used separately or integrated into other embodiments of the invention wherein all or part of the deposition particles (4) or deposition particle precursor particles (3) are formed in-situ near the deposition zone. In this embodiment energy from the energy source (9) can be used to thermally decompose a gaseous precursor to form the deposition particles or deposition particle precursor particles and/or the sheath gas (24) can also act as a reagent which, when in contact with the deposition particle precursor particle aerosol flow (4), chemically reacts to form the deposition particles or deposition particle precursor particles. Alternately, if the optical fiber preform substrate is not continuously traversed, the embodiment can be used for batch production.

Figure 10a and b show a deposition enhancer of a preferred embodiment of the invention for continuous or batch optical fiber cable production in which deposition enhancement is achieved by thermophoresis and/or inertia and wherein the deposition nozzle (8) and the cooling probe (10) and the optical fiber preform substrate (7) are rotated with respect to each other around a common axis of rotation so as to achieve essentially uniform particle deposition on the optical fiber preform substrate. The nozzle, preferably has an exit with a high aspect ratio so as to be essentially two dimensional in cross section and the cooling probe has an exit (28) essentially facing the exit of the nozzle. In such an embodiment, additional deposition enhancement can be achieved by directing the flow of cooling fluid in the direction opposite to that of the deposition nozzle by means of a cooling probe exit (28) in the shape of a slit having dimensions similar to that of the nozzle exit. Thus, if the nozzle is rotated, the cooling probe can be rotated equivalently so as to keep the nozzle and cooling probe jets essentially facing one another. If the optical fiber preform substrate is also moved along the axis of the cooling probe, this embodiment can be used for continuous optical fiber cable production. Alternately, if the optical fiber preform substrate is not continuously traversed, the embodiment can be used for batch production.

Figure 11 shows a side view of a deposition enhancing nozzle combined with a deposition particle conditioner of a preferred embodiment of the invention for continuous or batch optical fiber cable production in which a nozzle sheath gas flow (29) is introduced so as to reduce losses of deposition particles or deposition particle precursor particles and/or to further accelerate the deposition particles and/or, when the nozzle sheath gas flow is heated above the deposition aerosol gas temperature, to further enhance thermophoretic deposition.

Other embodiments or alterations are possible according to the invention by those knowledgeable in the art and the described embodiments are not intended to limit the scope of the invention in any way. For instance, other energy sources can be applied to the reactor such as radio-frequency, microwave, acoustic, laser induction heating or some other energy source such as chemical reaction. Other systems for the production of the particles for example, adiabatic expansion in a nozzle, arc discharge or electrospray system for the formation deposition particles are possible according to the invention. Other means of continuously producing the preform substrate are also possible according to the invention. Additionally, though the embodiments described focus on external deposition of deposition particles, the present invention includes embodiments in which deposition particles are internally deposited. Figure 12a depicts one such embodiment for batch production of optical fiber in which a slit deposition nozzle (8) is inserted inside an optical fiber preform substrate (7) tube. In this embodiment the aerosol the deposition particles (4) or deposition particle precursor particles (3) are introduced at one or both ends of the optical fiber preform substrate, the nozzle and substrate are rotated with respect to one another in order to deposit an essentially uniform layer, some or all of the deposition particles are deposited and the carrier gas (30) is evacuated at one or both ends of the optical fiber preform substrate. Figure 12b depicts one such embodiment for batch or continuous production of optical fiber in which an axisymmetric slit deposition nozzle (8) is inserted inside an optical fiber preform substrate (7) tube. In this embodiment the aerosol the deposition particles (4) or deposition particle precursor particles (3) is introduced into the nozzle, the nozzle and substrate are translated with respect to one another in order to deposit an essentially uniform layer, some or all of the deposition particles are deposited and the carrier gas (30) is evacuated.

Figure 13 shows a schematic of a preform cone (31) of length L (32) produced in the embodiment of the invention shown in Figures 1, 5 and 6. The optical fiber preform substrate (7) in the form of a tube is produced as in Figure 4 and is fed at a constant speed into a series of deposition units. Each unit adds an additional layer of deposition particles as the substrate passes until the preform cone reaches a maximum diameter (33). The preform is then fed to a furnace for sintering and drawing so as to produce an optical fiber (17). Examples 1 and 2 give calculations of critical parameters for the production of fiber suitable for Multi-Mode and Single Mode transmission, respectively.

### Example 1: Calculation for Continuous Synthesis of Multi-Mode Fiber

| | |
|---|---|
| Outer Diameter Preform Substrate Tube | 11 mm |
| Thickness of Substrate Tube | 0.9 mm |
| Maximum Diameter of Preform Cone | 150 mm |
| Length of Preform Cone | 1.0 m |
| Diameter of Drawn Fiber | 125 mm |
| Diameter of Drawn Fiber Core | 50 mm |
| Draw Down Balance | 1200 |
| Preform Substrate Feed Velocity | 62 mm/hr |
| Drawing Speed | 25 m/s |

### Example 2: Calculation for Continuous Synthesis of Single-Mode Fiber

| | |
|---|---|
| Outer Diameter Preform Substrate Tube | 5.5 mm |
| Thickness of Substrate Tube | 0.5 mm |
| Maximum Diameter of Preform Cone | 500 mm |
| Length of Preform Cone | 1.0 m |
| Diameter of Drawn Fiber | 125 mm |
| Diameter of Drawn Fiber Core | 8 mm |
| Draw Down Balance | 4000 |
| Preform Substrate Feed Velocity | 5.6 mm/hr |
| Drawing Speed | 25 m/s |

## Claims

1. A method for the production of preforms and/or fiber comprising the steps of:
- inserting a preform substrate into a preform reactor;
- introducing one or more carrier gases (30) and one or more deposition particles (4) or deposition particle precursor particles (3) into the preform reactor wherein the particles and/or particle precursors contain a matrix material and one or more doping agents; wherein one or more compounds or compound precursors are dispersed in a solvent or solution;
- applying a force to the deposition particles essentially in the direction of the preform substrate (7) to enhance the deposition particles in a deposition enhancer (6); and
- depositing all or part of the deposition particles on the substrate to form a deposition particle layer, **characterized in that** the method further comprises the step of:
- atomizing the solution or solutions to produce deposition particles of a given property or deposition particle precursor particles.

2. A method according to claim 1, **characterized in that** the method further comprises the step of:
introducing a preform substrate material in molten, pellet or powder form into an extruder (19) or mold so as to form a preform substrate (7).

3. A method according to any of claims 1-2, **characterized in that** the method further comprises the step of:
forming and/or conditioning the deposition particle precursor particles (3).

4. A method according to any of claims 1-3, **characterized in that** the method further comprises the step of:
evacuating all or part of the deposition aerosol particle carrier gas (30) and all or part of the remaining undeposited deposition particles (4) and/or deposition particle precursor particles (3) and or particle precursors from the preform reactor.

5. A method according to any of claims 1-4, **characterized in that** the method further comprises the step of:
applying an energy source to the deposition particle layer to fully or partially sinter the deposition particles (4).

6. A method according to claims 1-5, **characterized in that** the method further comprises the step of:
repeating any or all of steps in claims 1, 3, 4 and 5 so as to form a multilayered doped preform.

7. A method according to any of claims 1-6, **characterized in that** the method further comprises the step of:
removing all or part of the preform substrate.

8. A method according to any of claims 1-7, **characterized in that** the method further comprises the step of:
introducing the multilayered doped fiber preform into a drawing furnace (14) to form a fiber.

9. A method according to claims 1, 3, 4 and 5 **characterized in that** any or all of steps of claims 1, 3, 4 and 5 are applied simultaneously and in series by means of at least two or more deposition particle (4) or deposition particle precursor particle (3) sources and/or two or more deposition enhancers (6) to facilitate production of a multilayered preform having two or more layers.

10. A method according to any of claims 1-9, **characterized in that** the deposition particles (4) and/or deposition particle precursor particles (3) are produced by chemical reaction and/or thermal decomposition and/or supersaturation of one or more precursor gases followed by homogeneous and/or heterogeneous nucleation.

11. A method according to any of claims 1-10, **characterized in that** the substrate material is continually introduced into the mold or extruder (19), the formed substrate and the deposition particles (4) or deposition particle precursors are continually introduced into the preform reactor and the deposition particles are continuously deposited on the substrate so as to provide continuous production of layered preform.

12. A method according to any of claims 1-11, **characterized in that** the layered preform is continually fed into a drawing furnace (14) so as to produce a continuous optical fiber (17).

13. A method according to any of claims 1-10, **characterized in that** either the substrate material is intermittently introduced into the mold or extruder (19), the formed substrate and/or the deposition aerosols or deposition aerosol precursors are intermittently introduced into the preform reactor so as to comprise a batch production of layered preform and/or the layered preform is intermittently fed into a drawing furnace (14) so as to provide batch production of preform and/or fiber.

## Patentansprüche

1. Verfahren zur Herstellung von Vorformen und/oder Fasern mit den Schritten:
- Einsetzen eines Vorformsubstrates in einen Vorformreaktor;
- Einleiten eines oder mehrerer Trägergase (30) und eines oder mehrerer Abscheidungspartikel (4) oder Abscheidungspartikelvorläuferpartikel (3) in den Vorformreaktor, wobei die Partikel und/oder die Partikelvorläufer ein Matrixmaterial und einen oder mehrere Dotierstoffe beinhalten; wobei eine oder mehrere Verbindungen oder Verbindungsvorläufer in einem Lösungsmittel oder einer Lösung feinverteilt werden;
- Anwenden einer Kraft auf die Abscheidungspartikel im Wesentlichen in Richtung des Vorformsubstrates (7), um die Abscheidungspartikel in einem Abscheidungsanreicherer (6) anzureichern; und
- Abscheiden von allen oder einem Teil der Abscheidungspartikel auf dem Substrat zur Ausbildung einer Abscheidungspartikelschicht, **weiter gekennzeichnet durch den Schritt:**
- Zerstäuben der Lösung oder der Lösungen zur Erzeugung von Abscheidungspartikeln mit einer bestimmten Eigenschaft oder Abscheidungspartikelvorläuferpartikeln.

2. Verfahren nach Anspruch 1, **weiter gekennzeichnet durch den Schritt:**
Einführen eines geschmolzenen, pellet- oder pulverförmigen Vorformsubstratmaterials in einen Extruder (19) oder eine Gussform zur Ausbildung eines Vorformsubstrates (7).

3. Verfahren nach einem der Ansprüche 1-2, **weiter gekennzeichnet durch den Schritt:**
Ausbildung und/oder Aufbereitung der Abscheidungspartikelvorläuferpartikel (3).

4. Verfahren nach einem der Ansprüche 1-3, **weiter gekennzeichnet durch den Schritt:**
Evakuieren von allem oder einem Teil des Abscheidungsaerosolpartikelträgergases (30) und allen oder einem Teil der verbliebenen, nicht abgeschiedenen Abscheidungspartikel (4) und/oder der Abscheidungspartikelvorläuferpartikel (3) und/oder der Partikelvorläufer aus dem Vorformreaktor.

5. Verfahren nach einem der Ansprüche 1-4, **weiter gekennzeichnet durch den Schritt:**
Anwenden einer Energiequelle auf die Abscheidungspartikelschicht, um die Abscheidungspartikel (4) ganz oder teilweise zu sintern.

6. Verfahren nach einem der Ansprüche 1-5, **weiter gekennzeichnet durch den Schritt:**
Wiederholen eines oder aller Schritte der Ansprüche 1, 3, 4, und 5 zur Ausbildung einer mehrlagigen dotierten Vorform.

7. Verfahren nach einem der Ansprüche 1-6, **weiter gekennzeichnet durch den Schritt:**
Entfernen von allem oder einem Teil des Vorformsubstrates.

8. Verfahren nach einem der Ansprüche 1-7, **weiter gekennzeichnet durch den Schritt:**
Einführen der mehrlagigen dotierten Faservorform in einen Ziehofen (14) zur Ausbildung einer Faser.

9. Verfahren nach den Ansprüchen 1, 3, 4 und 5, **dadurch gekennzeichnet, dass** einer der oder alle Schritte der Ansprüche 1, 3, 4, und 5 gleichzeitig und hintereinander mithilfe von zumindest zwei oder mehr Quellen von Abscheidungspartikeln (4) oder Abscheidungspartikelvorläuferpartikeln (3), und/oder zwei oder mehr Abscheidungsanreicherern (6) zur Erleichterung der Herstellung einer mehrlagigen Vorform mit zwei oder mehr Schichten angewendet werden.

10. Verfahren nach einem der Ansprüche 1-9, **dadurch gekennzeichnet, dass** die Abscheidungspartikel (4) und/oder die Abscheidungspartikelvorläuferpartikel (3) durch eine chemische Reaktion und/oder thermische Zersetzung und/oder Übersättigung eines oder mehrerer Vorläufergase mit nachfolgender homogener oder heterogener Keimbildung hergestellt werden.

11. Verfahren nach einem der Ansprüche 1-10, **dadurch gekennzeichnet, dass** das Substratmaterial kontinuierlich in die Gussform oder den Extruder (19) eingeführt wird, das ausgebildete Substrat und die Abscheidungspartikel (4) oder die Abscheidungspartikelvorläufer kontinuierlich in den Vorformreaktor eingeführt werden und die Abscheidungspartikel kontinuierlich auf dem Substrat abgeschieden werden, um eine kontinuierliche Herstellung der geschichteten Vorform bereitzustellen.

12. Verfahren nach einem der Ansprüche 1-11, **dadurch gekennzeichnet, dass** die geschichtete Vorform zur Herstellung einer kontinuierlichen, optischen Faser (17) kontinuierlich einem Ziehofen (14) zugeführt wird.

13. Verfahren nach einem der Ansprüche 1-10, **dadurch gekennzeichnet, dass** entweder das Substratmaterial diskontinuierlich in die Gussform oder den Extruder (19) eingeführt wird, das ausgebildete Substrat und/oder die Abscheidungsaerosole oder die Abscheidungsaerosolvorläufer diskontinuierlich in den Vorformreaktor zur Chargenfertigung von geschichteten Vorformen eingeführt werden, und/oder die geschichtete Vorform diskontinuierlich einem Ziehofen (14) zur Chargenfertigung einer Vorform und/oder einer Faser zugeführt wird.

## Revendications

1. Méthode de production de préformes et/ou de fibres comprenant les étapes consistant à :
- insérer un substrat de préforme dans un réacteur de préforme,
- introduire un ou plusieurs gaz vecteurs (30) et une ou plusieurs particules de dépôt (4) et/ou particules précurseurs de particules de dépôt (3) dans le réacteur de préforme, dans laquelle les particules et/ou les particules précurseurs contiennent un matériau de matrice et un ou plusieurs agents dopants ; dans laquelle un ou plusieurs composés ou précurseurs de composé sont dispersés dans un solvant ou une solution ;
- appliquer une force aux particules de dépôt essentiellement dans la direction du substrat de préforme (7) pour améliorer le dépôt des particules dans un améliorateur de dépôt (6), et
- déposer la totalité ou une partie des particules de dépôt sur le substrat pour former une couche de particules de dépôt, **caractérisée en ce que** la méthode comprend en outre l'étape consistant à :
- atomiser la solution ou les solutions pour produire des particules de dépôt ayant une propriété donnée ou des particules précurseurs de particules de dépôt.

2. Méthode selon la revendication 1, **caractérisée en ce que** la méthode comprend en outre l'étape consistant à :
introduire un matériau formant substrat de préforme sous une forme en fusion, en pastilles ou en poudre dans une extrudeuse (19) ou un moule de manière à former un substrat de préforme (7).

3. Méthode selon l'une quelconque des revendications 1 ou 2, **caractérisée en ce que** la méthode comprend en outre l'étape consistant à :
former et/ou conditionner les particules (3) précurseurs de particules de dépôt.

4. Méthode selon l'une quelconque des revendications 1 à 3, **caractérisée en ce que** la méthode comprend en outre l'étape consistant à :
évacuer la totalité ou une partie du gaz (30) vecteur de l'aérosol de particules de dépôt et la totalité ou une partie des particules de dépôt (4) et/ou des particules des précurseurs de particules (3) et/ou des précurseurs de particules non déposées restantes du réacteur de préforme.

5. Méthode selon l'une quelconque des revendications 1 à 4, **caractérisée en ce que** la méthode comprend en outre l'étape consistant à :
appliquer une source d'énergie à la couche de particules de dépôt pour fritter totalement ou partiellement les particules de dépôt (4).

6. Méthode selon les revendications 1 à 5, **caractérisée en ce que** la méthode comprend en outre l'étape consistant à :
répéter une ou la totalité des étapes des revendications 1, 3, 4 et 5 de manière à former une préforme dopée multicouche.

7. Méthode selon l'une quelconque des revendications 1 à 6, **caractérisée en ce que** la méthode comprend en outre l'étape consistant à :
retirer la totalité ou une partie du substrat de préforme.

8. Méthode selon l'une quelconque des revendications 1 à 7, **caractérisée en ce que** la méthode comprend en outre l'étape consistant à :
introduire la préforme de fibres dopée multicouche dans un four d'étirage (14) pour former une fibre.

9. Méthode selon la revendication 1, 3, 4 et 5, **caractérisée en ce que** l'une quelconque ou la totalité des étapes des revendications 1, 3, 4 et 5 sont appliquées simultanément et en série au moyen d'au moins deux sources ou plus de particules de dépôt (4) ou de particules précurseurs de particules de dépôt (3) et/ou de deux ou plusieurs améliorateurs de dépôt (6) pour faciliter la production d'une préforme multicouche ayant deux couches ou plus.

10. Méthode selon l'une quelconque des revendications 1 à 9, **caractérisée en ce que** les particules de dépôt (4) et/ou les particules précurseurs de particules de dépôt (3) sont produites par réaction chimique et/ou décomposition thermique et/ou sursaturation d'un ou plusieurs gaz précurseurs, suivie par une nucléation homogène et/ou hétérogène.

11. Méthode selon l'une quelconque des revendications 1 à 10, **caractérisée en ce que** le matériau de substrat est introduit de manière continue dans le moule ou l'extrudeuse (19), le substrat formé et les particules de dépôt (4) ou des particules précurseurs de particules de dépôt sont introduits de manière continue dans le réacteur de préforme et les particules de dépôt sont déposées de manière continue sur le substrat de manière à assurer la production continue de la préforme multicouche.

12. Méthode selon l'une quelconque des revendications 1 à 11, **caractérisée en ce que** la préforme multicouche alimente en continu le four d'étirage (14) de manière à produire une fibre optique continue.

13. Méthode selon l'une quelconque des revendications 1 à 10, **caractérisée en ce que** le matériau de substrat est introduit par intermittence dans le moule ou l'extrudeuse (19), le substrat formé et/ou les aérosols de dépôt ou les précurseurs d'aérosol de dépôt sont introduits par intermittence dans le réacteur de préforme de manière ménager une production par lots de préforme multicouche, et/ou la préforme multicouche alimente par intermittence un four d'étirage (14) de manière à ménager une production par lot d'une préforme et/ou d'une fibre.
